# EUROPÄISCHE PATENTSCHRIFT

(11) **EP 1 906 049 B1**
(45) Veröffentlichungstag und Bekanntmachung des Hinweises auf die Patenterteilung: **20.01.2010**
(21) Anmeldenummer: 07018274.6
(22) Anmeldetag: 18.09.2007
(51) Int. Cl.: F16F 15/129

(54) **Reibeinrichtung für einen Torsionsschwingungsdämpfer**
Friction device for a torsion vibration damper
Dispositif de friction pour un amortisseur d'oscillations à torsions

(30) Priorität: 26.09.2006 DE 102006045232
(43) Veröffentlichungstag der Anmeldung: 02.04.2008
(73) Patentinhaber: ZF Friedrichshafen AG, 88038 Friedrichshafen (DE)
(72) Erfinder: Stroh, Eugen, 97084 Würzburg (DE); Buer, Gerald, 96172 Mühlhausen (DE)

(56) Entgegenhaltungen:
- EP-A- 1 816 370
- DE-A1- 1 953 280
- DE-A1- 3 022 212
- DE-U1- 8 520 990

## Beschreibung

Die Erfindung betrifft eine Reibeinrichtung für einen Torsionsschwingungsdämpfer, insbesondere für die Kupplungsscheibe einer Kraftfahrzeugkupplung, gemäß dem Oberbegriff von Patentanspruch 1.

Eine Reibeinrichtung dieser Art ist aus der DE 85 20 990 U1 bekannt. Dort ist es bereits als nachteilig erkannt worden, dass bei der Herstellung von ringförmigen Federn einer Reibeinrichtung ein relativ hoher Teil des verwendeten Ausgangsmaterials verloren geht. Daher wird vorgeschlagen, ein Endlosprofil zu verwenden, um aus einem abgelängten Abschnitt einen Ring zu formen, der an der Stoßstelle offen sein, aber auch mittels eines Schweißvorgangs geschlossen werden kann.

Der Schweißvorgang stellt eine hohe thermisch Belastung des Bauteils dar, so dass sich insoweit inhomogene Eigenschaften des Reibringes über dessen Umfang ergeben können. Dies kann sich im Betrieb des Reibrings negativ auswirken. Das gilt auch mit Blick auf mögliche wärmebedingte Verzüge des Rings, die sich störend auswirken können.

Der Erfindung liegt daher die **Aufgabe** zugrunde, eine Reibeinrichtung der gattungsgemäßen Art so weiterzubilden, dass die beschriebenen Probleme nicht mehr auftreten. Der Reibring soll also verzugsfrei ausgeführt sein. Weiterhin soll er über seinen Umfang möglichst homogene Materialeigenschaften aufweisen. Dennoch soll eine einfache und damit kostengünstige Herstellungsweise der Reibeinrichtung und insbesondere des Reibrings sichergestellt werden.

Erfindungsgemäß wird die Aufgabe durch die Merkmale des Patentanspruch 1 gelöst.

Die beiden komplementär zusammenwirkenden Teile des Profils bilden dabei in Umfangsrichtung des Reibrings vorzugsweise zumindest teilweise einen Hinterschnitt.

Um eine besonders günstige Ausgestaltung des Hinterschnitts zu erhalten, sieht eine Weiterbildung vor, dass das eine Teil des Profils, in Richtung der Drehachse betrachtet, eine kreisabschnittsförmige Berandung aufweist, wobei das andere Teil des Profils eine kreisabschnittförmigen Ausnehmung aufweist. Dabei kann sich mit Vorteil die kreisabschnittsförmige Berandung bzw. die kreisabschnittförmigen Ausnehmung etwa über einem Umfangswinkel von 270° erstrecken; die Form ist dann also etwa als Dreiviertelkreis ausgeführt.

Die beiden Stoßstellen des Rings können eine plastische Verformung aufweisen, die nach dem Zusammenfügen der Teile des komplementär zusammenwirkenden Profils erzeugt ist. Die plastische Verformung ist insbesondere eine Anprägung, die einen Formschluss zwischen den beiden Teilen des komplementär zusammenwirkenden Profils herstellt. Damit kann sichergestellt werden, dass sich die beiden Stoßstellen nach der Montage nicht mehr durch relative axiale Verschiebung lösen können. Der Formschluss ist in diesem Falle in Richtung der Drehachse wirksam. Die plastische Verformung kann z. B. als keil- oder nutförmige Einprägung in den Seitenbereich des Reibrings ausgebildet sein.

Der Reibring kann aus Kunststoff oder aus Metall bestehen. Im Falle dessen, dass ein Metall vorliegt, kann für den Reibring ein Härteprozess zur Erzeugung einer hohen Verschleißresistenz vorgesehen werden. Der Reibring kann auch mit einer verschleißresistenten Beschichtung versehen sein.

Schließlich hat es sich aus fertigungstechnischer Sicht bewährt, wenn die beiden komplementär zusammenwirkenden Teile des Profils durch einen Stanzvorgang erzeugt sind.

Mit der vorgeschlagenen Ausgestaltung wird zunächst erreicht, dass die Fertigung des Reibrings relativ einfach und damit kostengünstig möglich ist.

Weiterhin kommt es - da kein thermischer Verbindungsvorgang (Schweißvorgang) benötigt wird, um den Reibring an den Stoßstelle der Enden des Ringmaterials zu schließen - zu keinen unerwünschten Wärmeverzügen. Auch sind die Materialeigenschaften des Rings über den Umfang absolut homogen.

Durch die erfindungsgemäße Vorgehensweise wird ein Reibring mit stabiler Form geschaffen.

Da der Ring nicht - wie bei vorbekannten Lösungen gemäß dem Stand der Technik - aus einem plattenartigen Material ausgeschnitten oder ausgestanzt werden muss, sondern aus einer Meterware, d. h. aus einem Abschnitt eines Endlosprofils, gefertigt wird, ist der Materialeinsatz zur Herstellung des Rings entsprechend minimal, d. h. es ergeben sich kaum Abfallanteile.

In der Zeichnung ist ein Ausführungsbeispiel der Erfindung dargestellt. Es zeigen:
- Fig. 1: die Kupplungsscheibe einer Kraftfahrzeug-Kupplung mit einem Torsionsschwingungsdämpfer im Radialschnitt und
- Fig. 2: einen Reibring des Torsionsschwingungsdämpfers im zusammengefügten Zustand in der Vorderansicht.

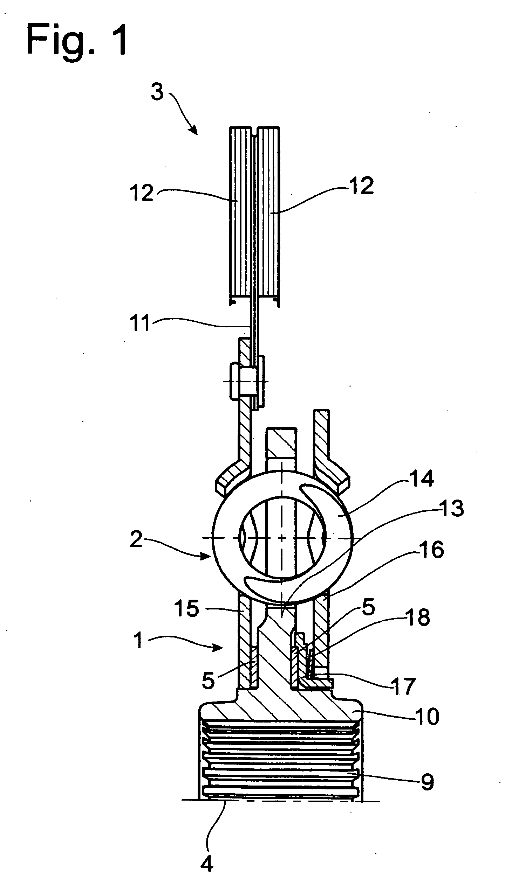

In Fig. 1 ist eine Kupplungsscheibe 3 einer Kraftfahrzeugkupplung dargestellt, die einen an sich bekannten Aufbau hat. Die Kupplungsscheibe 3 ist mit einem Torsionsschwingungsdämpfer 2 ausgestattet, der wiederum eine Reibeinrichtung 1 hat. Die Kupplungsscheibe 3 hat ein mit einem Vielkeilprofil 9 versehenes Nabenteil 10. Sie besteht weiterhin aus einem Belagträger 11, der beidseitig Reibbeläge 12 trägt. Die Reibbeläge 12 werden in der nicht dargestellten Kupplung zwischen einem Schwungrad und einer Anpressplatte durch Reibkraft eingespannt, wodurch eine Drehmomentübertragung vom Motor über die Kupplungsscheibe 3 in eine nicht dargestellte Getriebeeingangswelle erfolgen kann.

Zwischen dem Belagträger 11 und der Nabe 10 ist der Torsionsschwingungsdämpfer 2 angeordnet. Dieser ist wie folgt konzipiert: Die Nabe 10 ist mit einer Nabenscheibe 13 versehen, die in über den Umfang verteilt angeordneten Fenstern Torsionsfedern 14 aufnimmt. Zu beiden Seiten der Nabenscheibe 13 sind eine den Belagträger 11 tragende Scheibe 15 bzw. eine Deckscheibe 16 angeordnet, die untereinander über nicht dargestellte Abstandsniete auf Abstand gehalten werden und fest miteinander verbunden sind.

Auch die beiden Scheiben 15 und 16 haben über den Umfang verteilt angeordnete Fenster für die Aufnahme der Torsionsfedern 14. Bei Einleitung eines Drehmoments über die Reibbeläge 12 und den Belagträger 11 sowie die Scheibe 15 und die Deckscheibe 16 auf die Torsionsfedern 14 leiten diese unter elastischer Verformung das Drehmoment auf die Nabenscheibe 13 und damit auf die Nabe 10 weiter.

Zur Dämpfung von Torsionsschwingungen sind zwischen der Nabenscheibe 13 und der Scheibe 1 5 bzw. zwischen der Nabenscheibe 1 3 und der Deckscheibe 16 die Reibeinrichtungen 1 angeordnet. Diese bestehen im Ausführungsbeispiel aus zwei Reibringen 5 beiderseits der Nabenscheibe 13. In Fig. 1 ist auf der rechten Seite zusätzlich noch ein Druckring 1 7 sowie eine Reibfeder 18 montiert. Die Reibfeder 18 kann in axialer Richtung gewellt ausgebildet sein; im montierten Zustand ist sie unter axialer Vorspannung angeordnet. Die Reibfeder 18 erzeugt dadurch die Anpresskraft für die Reibeinrichtung. Sie stützt sich dabei an dem Druckring 17 ab, der - was nicht näher dargestellt ist - drehfest mit der Deckscheibe 1 6 verbunden ist, der sich jedoch axial verschieben lässt.

Somit wird verhindert, dass eine ungewollte Reibung zwischen der Reibfeder 18 und der Deckscheibe 16 stattfindet. Bei einer Relativbewegung zwischen den Eingangs- und Ausgangsteilen des Torsionsschwingungsdämpfers 2 muss eine Reibkraft zwischen der Nabenscheibe 13, den Reibringen 5, der Scheibe 15 und dem Druckring 17 übertragen werden, die von den Reibkoeffizienten der beteiligten Bauteile und der axialen Vorspannung abhängt. Hierdurch wird der Torsionsdämpfungseffekt erzeugt.

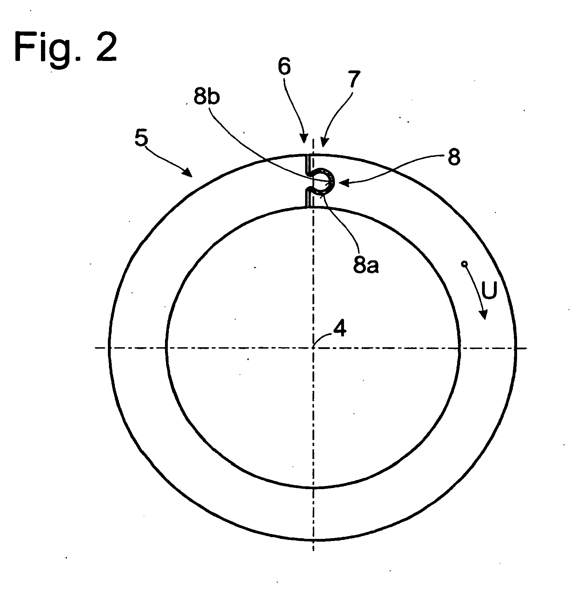

Um die Reibringe 5 kostengünstig herzustellen und dennoch sicherzustellen, dass sie sich unter Fliehkrafteinwirkung nicht über Gebühr verformen, ist der Reibring 5 wie in Fig. 2 zu erkennen aufgebaut. Der Reibring 5 besteht aus einem Abschnitt eines Endlosprofils. D. h. von einem als Meterware vorliegenden Strang, beispielsweise Draht, wird ein Stück entsprechender Länge abgeschnitten. Im Ausführungsbeispiel handelt es sich um ein Profil mit Rechteckform, wie sich aus der Radialschnittdarstellung gemäß Fig. 1 ergibt. Dieser von der Meterware abgeschnittene Teil wird zunächst einer Bearbeitung an den Endseiten unterzogen. Es wird nämlich an den künftigen Stoßstellen 6 und 7 je ein Teil 8a und 8b eines zusammenwirkenden Profils 8 eingestanzt.

Wie Fig. 2 entnommen werden kann, sind die beiden komplementären Teile 8a und 8 b so ausgeformt, dass sie im zusammengefügten Zustand - in Umfangsrichtung U betrachtet - einen Hinterschnitt bilden, so dass sich die beiden Stoßstellen 6 und 7 nach dem Zusammenfügen nicht mehr voneinander lösen können, sondern fest zusammenhalten. Es liegt dann also ein Formschluss vor, der den entstandenen Reibring 5 in der in Fig. 2 dargestellten Form hält, auch wenn Fliehkräfte auf ihn wirken.

Das Biegen der abgelängten Abschnitte des Drahts bzw. Profils zu dem Reibring 5 kann kostengünstig in entsprechenden automatischen Werkzeugmaschinen erfolgen. Die Werkzeuge hierfür sind relativ einfach und preiswert.

Wie bereits erwähnt, kann der Querschnitt des verarbeiteten Profils beliebig in Abhängigkeit der Wünsche und Bedürfnisse gewählt werden.

### Bezugszeichenliste

- 1: Reibeinrichtung
- 2: Torsionsschwingungsdämpfer
- 3: Kupplungsscheibe
- 4: Drehachse
- 5: Reibring
- 6: Stoßstelle
- 7: Stoßstelle
- 8: zusammenwirkendes Profil
- 8a: Teil des zusammenwirkenden Profils
- 8b: Teil des zusammenwirkenden Profils
- 9: Vielkeilprofil
- 10: Nabenteil
- 11: Belagträger
- 12: Reibbelag
- 13: Nabenscheibe
- 14: Torsionsfeder
- 15: Scheibe
- 16: Deckscheibe
- 17: Druckring
- 18: Reibfeder

- U: Umfangsrichtung

## Patentansprüche

1. Reibeinrichtung (1) für einen Torsionsschwingungsdämpfer (2), insbesondere für die Kupplungsscheibe (3) einer Kraftfahrzeugkupplung, die zur Erzeugung einer Reibkraft mindestens einen konzentrisch zur Drehachse (4) des Torsionsschwingungsdämpfers (2) angeordneten Reibring (5) aufweist,
**dadurch gekennzeichnet,**
**dass** der Reibring (5) aus einem zu einem Ring geformten Abschnitt eines Endlosprofils besteht, wobei die sich ergebenden Stoßstellen (6, 7) des geformten Rings miteinander verbunden sind und die beiden Stoßstellen (6, 7) des Rings mit zwei Teilen (8a, 8b) eines komplementär zusammenwirkenden Profils (8) versehen sind, die im montierten Zustand des Reibrings (5) die Stoßstellen (6, 7) formschlüssig miteinander verbinden.

2. Reibeinrichtung nach Anspruch 1, **dadurch gekennzeichnet, dass** die beiden komplementär zusammenwirkenden Teile (8a, 8b) des Profils (8) in Umfangsrichtung (U) des Reibrings (5) zumindest teilweise einen Hinterschnitt bilden.

3. Reibeinrichtung nach Anspruch 2, **dadurch gekennzeichnet, dass** das eine Teil (8a) des Profils (8), in Richtung der Drehachse (4) betrachtet, eine kreisabschnittsförmige Berandung aufweist, wobei das andere Teil (8b) des Profils (8) eine kreisabschnittförmige Ausnehmung aufweist.

4. Reibeinrichtung nach Anspruch 3, **dadurch gekennzeichnet, dass** sich die kreisabschnittsförmige Berandung bzw. die kreisabschnittförmige Ausnehmung etwa über einem Umfangswinkel von 270° erstreckt.

5. Reibeinrichtung nach einem der Ansprüche 1 bis 4, **dadurch gekennzeichnet, dass** die beiden Stoßstellen (6, 7) des Rings eine plastische Verformung aufweisen, die nach dem Zusammenfügen der Teile (8a, 8b) des komplementär zusammenwirkenden Profils (8) erzeugt ist.

6. Reibeinrichtung nach Anspruch 5, **dadurch gekennzeichnet, dass** die plastische Verformung eine Anprägung ist, die einen Formschluss zwischen den beiden Teilen (8a, 8b) des komplementär zusammenwirkenden Profils (8) herstellt.

7. Reibeinrichtung nach Anspruch 6, **dadurch gekennzeichnet, dass** der Formschluss in Richtung der Drehachse (4) wirksam ist.

8. Reibeinrichtung nach einem der Ansprüche 1 bis 7, **dadurch gekennzeichnet, dass** der Reibring (5) aus Kunststoff besteht.

9. Reibeinrichtung nach einem der Ansprüche 1 bis 7, **dadurch gekennzeichnet, dass** der Reibring (5) aus Metall besteht.

10. Reibeinrichtung nach Anspruch 9, **dadurch gekennzeichnet, dass** der Reibring (5) einem Härteprozess unterzogen ist.

11. Reibeinrichtung nach Anspruch 8 oder 9, **dadurch gekennzeichnet, dass** der Reibring (5) mit einer verschleißresistenten Beschichtung versehen ist.

12. Reibeinrichtung nach einem der Ansprüche 1 bis 11, **dadurch gekennzeichnet, dass** die beiden komplementär zusammenwirkenden Teile (8a, 8b) des Profils (8) durch einen Stanzvorgang erzeugt sind.

## Claims

1. Friction device (1) for a torsional vibration damper (2), in particular for the clutch disc (3) of a motor vehicle clutch, which, to generate a frictional force, has at least one friction ring (5) arranged concentrically with respect to the axis of rotation (4) of the torsional vibration damper (2), **characterized in that** the friction ring (5) consists of a portion, shaped into a ring, of an endless profile, the resulting joining points (6, 7) of the formed ring being connected to one another, and the two joining points (6, 7) of the ring being provided with two parts (8a, 8b) of a complementarily interacting profile (8), which, in the mounted state of the friction ring (5), connect the joining points (6, 7) positively to one another.

2. Friction device according to Claim 1, **characterized in that** the two complementarily interacting parts (8a, 8b) of the profile (8) form at least partially an undercut in the circumferential direction (U) of the friction ring (5).

3. Friction device according to Claim 2, **characterized in that** one part (8a) of the profile (8) has, as seen in the direction of the axis of rotation (4), a margin which is in the form of a segment of a circle, the other part (8b) of the profile (8) having a recess which is in the form of a segment of a circle.

4. Friction device according to Claim 3, **characterized in that** the margin which is in the form of a segment of a circle or the recess which is in the form of a segment of a circle extends approximately over a circumferential angle of 270°.

5. Friction device according to one of Claims 1 to 4, **characterized in that** the two joining points (6, 7) of the ring have plastic deformation which is generated after the parts (8a, 8b) of the complementarily interacting profile (8) have been joined together.

6. Friction device according to Claim 5, **characterized in that** the plastic deformation is an embossing which makes a positive connection between the two parts (8a, 8b) of the complementarily interacting profile (8).

7. Friction device according to Claim 6, **characterized in that** the positive connection is active in the direction of the axis of rotation (4).

8. Friction device according to one of Claims 1 to 7, **characterized in that** the friction ring (5) consists of plastic.

9. Friction device according to one of Claims 1 to 7, **characterized in that** the friction ring (5) consists of metal.

10. Friction device according to Claim 9, **characterized in that** the friction ring (5) is subjected to a hardening process.

11. Friction device according to Claim 8 or 9, **characterized in that** the friction ring (5) is provided with a wear-resistant coating.

12. Friction device according to one of Claims 1 to 11, **characterized in that** the two complementarily interacting parts (8a, 8b) of the profile (8) are generated by means of a stamping operation.

## Revendications

1. Dispositif de friction (1) pour un amortisseur de vibrations torsionnelles (2), en particulier pour le disque d'embrayage (3) d'un embrayage de véhicule automobile, qui présente, pour produire une force de friction, au moins une bague de friction (5) disposée concentriquement à l'axe de rotation (4) de l'amortisseur de vibrations torsionnelles (2),
**caractérisé en ce que**
la bague de friction (5) se compose d'une portion d'un profilé sans fin façonné en forme de bague, les points d'aboutement (6, 7) résultants, de la bague façonnée, étant connectés l'un à l'autre et les deux points d'aboutement (6, 7) de la bague étant pourvus de deux parties (8a, 8b) d'un profilé coopérant de manière complémentaire (8), qui relient l'un à l'autre par engagement par correspondance géométrique les points d'aboutement (6, 7) dans l'état monté de la bague de friction (5).

2. Dispositif de friction selon la revendication 1, **caractérisé en ce que** les deux parties (8a, 8b) du profilé (8) coopérant de manière complémentaire forment dans la direction périphérique (U) de la bague de friction (5) au moins en partie une contre-dépouille.

3. Dispositif de friction selon la revendication 2, **caractérisé en ce qu'**une partie (8a) du profilé (8), vue dans la direction de l'axe de rotation (4), présente une bordure en forme de portion de cercle, l'autre partie (8b) du profilé (8) présentant un évidement en forme de portion de cercle.

4. Dispositif de friction selon la revendication 3, **caractérisé en ce que** la bordure en forme de portion de cercle ou l'évidement en forme de portion de cercle s'étend environ sur un angle périphérique de 270°.

5. Dispositif de friction selon l'une quelconque des revendications 1 à 4, **caractérisé en ce que** les deux points d'aboutement (6, 7) de la bague présentent une déformation plastique, qui est produite après l'assemblage des parties (8a, 8b) du profilé coopérant de manière complémentaire (8).

6. Dispositif de friction selon la revendication 5, **caractérisé en ce que** la déformation plastique est un matriçage, qui crée un engagement par correspondance géométrique entre les deux parties (8a, 8b) du profilé coopérant de manière complémentaire (8).

7. Dispositif de friction selon la revendication 6, **caractérisé en ce que** l'engagement par correspondance géométrique est effectif dans la direction de l'axe de rotation (4).

8. Dispositif de friction selon l'une quelconque des revendications 1 à 7, **caractérisé en ce que** la bague de friction (5) se compose de plastique.

9. Dispositif de friction selon l'une quelconque des revendications 1 à 7, **caractérisé en ce que** la bague de friction (5) se compose de métal.

10. Dispositif de friction selon la revendication 9, **caractérisé en ce que** la bague de friction (5) est soumise à un processus de trempe.

11. Dispositif de friction selon la revendication 8 ou 9, **caractérisé en ce que** la bague de friction (5) est pourvue d'un revêtement résistant à l'usure.

12. Dispositif de friction selon l'une quelconque des revendications 1 à 11, **caractérisé en ce que** les deux parties (8a, 8b) coopérant de manière complémentaire du profilé (8) sont produites par une opération d'estampage.
